Europäisches Patentamt

European Patent Office

Office européen des brevets

(19)

(11) **EP 1 116 766 B1**

(12) ## EUROPEAN PATENT SPECIFICATION

(45) Date of publication and mention
of the grant of the patent:
**29.10.2003 Bulletin 2003/44**

(21) Application number: **99929748.4**

(22) Date of filing: **07.07.1999**

(51) Int Cl.[7]: **C09K 3/10**, E21D 11/38,
C08G 18/48
// C08J9:04, C08G18:48,
C08G101:00

(86) International application number:
**PCT/JP99/03686**

(87) International publication number:
**WO 00/002973 (20.01.2000 Gazette 2000/03)**

(54) **MATERIAL FOR WATER CUT-OFF AND METHOD FOR CUT-OFF OF WATER**

DICHTUNGSMITTEL UND VERFAHREN ZUM ABDICHTEN GEGEN WASSER

MATERIAU ARRETANT L'EAU ET PROCEDE CORRESPONDANT

(84) Designated Contracting States:
**DE FR GB**

(30) Priority: **09.07.1998 JP 21175998**

(43) Date of publication of application:
**18.07.2001 Bulletin 2001/29**

(73) Proprietor: **Sanyo Chemical Industries, Ltd.
Kyoto-shi Kyoto-fu, 605-0995 (JP)**

(72) Inventors:
• **Miura, Kimio, Sanyo Chemical Industries, Ltd.
Kyoto-shi, Kyoto 605-0995 (JP)**
• **Ban, Sukeo, Sanyo Chemical Industries, Ltd.
Kyoto-shi, Kyoto 605-0995 (JP)**

(74) Representative: **Matthews, Derek Peter
Frank B. Dehn & Co.,
European Patent Attorneys,
179 Queen Victoria Street
London EC4V 4EL (GB)**

(56) References cited:
**JP-A- 3 239 737          JP-A- 60 076 525
US-A- 4 985 467**

• **PATENT ABSTRACTS OF JAPAN vol. 006, no.
177 (C-124), 11 September 1982 (1982-09-11) &
JP 57 092032 A (NHK SPRING CO LTD), 8 June
1982 (1982-06-08)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a waterproof sealing material and a method for preventing water leaking using the same. More specifically, the present invention relates to a waterproof sealing material which is suitably used in the fields of civil engineering, architecture, and other various fields, and which is compressed easily and maintains a better waterproof watertight effect over a long period than conventional products; and a method for preventing water leaking using said material.

In shield methods in which a tunnel is constructed by combining segments as constituent units, with respect to a sealing material for segments in which the surfaces of the segments are joined together by means of a tenon and mortise arrangement, it is required that the sealing material has a lower compression stress at the joining of the segments. This is because, whereas conventional segments are fixed together by fastening of screw bolts, the tenon and mortise segments are fixed by combining the "concave" mortise and "convex" tenon portions, so that the procedure of fastening the segments is simplified, and the fastening power is decreased. Thus, a strong force to compress the sealing material cannot be expected. With a water-swelling rubber of non-foamed type, it is difficult to deal with such a requirement of a low compression stress.

Traditionally, known materials that satisfy this requirement of a low compression stress include waterproof sealing materials of foamed water-swelling rubbers (e.g. JP 57-92032 A, JP 08-121600 A, JP 08-157805 A, and JP 09-111899 A). These waterproof sealing materials of water-swelling foams are prepared by kneading unvulcanised rubber with a highly water-absorbent resin and a blowing agent, etc., followed by vulcanizing and molding.

However, because these foamed waterproof sealing materials have a large specific surface, there has been a problem that the highly water-absorbent resin mixed in base rubber falls away from the base rubber easily, so that it is difficult to maintain the water absorbing performance over a long period.

It is an object of the present invention to provide a waterproof sealing material, which overcomes the above-mentioned problems in conventional waterproof sealing materials of water-swelling foams, has a small percentage of loss in mass, is capable of maintaining the expansion performance due to water absorption over a long period, and has a low compression stress; and also to provide a method for preventing water leaking using the material.

SUMMARY OF THE INVENTION

The present invention provides a molded and optionally processed polyurethane foam product for waterproof sealing, wherein the polyurethane foam contains an oxyethylene group, and has a density of 0.3 to 0.9 g/cm3, a volumetric swelling ratio of 1.2 to 8, and exhibits not more than 3 % loss in mass, both when immersed in water at 70 °C for 7 days and when immersed in water at 23 °C for 180 days, and the waterproof sealing material comprises a molded, or molded and processed, product. The present invention also provides a method for preventing water leaking using the waterproof sealing material on adjoining surfaces of segments in shield methods, in which a tunnel is constructed by combining the segments.

BRIEF DESCRIPTION OF THE DRAWINGS

Fig. 1 is a sectional view showing one example of a waterproof sealing material of two-layer structure, which is formed by laminating an oxyethylene group-containing polyurethane foam of the present invention with a porous elastic body.
Fig. 2 is a perspective view of one embodiment of a segment with tenon and mortise, which is used in shield method when constructing a tunnel.
Fig. 3 is a partially sectional view showing how the tenon and mortise arrangement is used to carry out sealing between adjacent segments when a tenon (a convex portion) is combined with a mortise (a concave portion).
Fig. 4 is a schematic plan view showing steel flanges used for measuring the performance of preventing water leaking and sticking a test piece thereto.
Fig. 5 is a schematic sectional view showing measurement of the performance of preventing water leaking.

DETAILED DISCLOSURE OF THE INVENTION

The waterproof sealing material of the present invention comprises a molded or molded and processed product of an oxyethylene group-containing polyurethane foam. Because the oxyethylene group-containing polyurethane resin itself is expanded when the waterproof sealing material absorbs water, the waterproof sealing material contains no expansive component that elutes into water. Therefore, the waterproof sealing material has a small percentage of loss in mass; and shows a stable expansion performance over a long period.

The oxyethylene group-containing polyurethane foam used in the waterproof sealing material of the present invention has a density of usually 0.3 to 0.9 g/cm$^3$, preferably 0.45 to 0.75 g/cm$^3$. If the density is less than 0.3 g/cm$^3$, the wall of the cells becomes thin, so that the cells are destroyed by the initial compression stress during the joining of the segments, and a good stress relaxation characteristic cannot be obtained. If the density exceeds 0.9 g/cm$^3$, the effect of reducing the compression stress during the joining of the segments is decreased.

The polyurethane foam used in the waterproof sealing material of the present invention has a volumetric swelling ratio of usually 1.2 to 8, preferably 2 to 6, in purified water at 23 °C. The volumetric swelling ratio herein refers to a ratio at which the volume increases by water absorption, and which is determined by the method described below. If the volumetric swelling ratio is less than 1.2, the effect of preventing water leaking after swelling with water is not sufficient. If the volumetric swelling ratio exceeds 8, the resin strength after swelling by water absorption is reduced, so that the performance of preventing water leaking cannot be maintained.

To obtain the above-specified volumetric swelling ratio, it is preferable that the content of oxyethylene groups in the polyurethane foam is from 5 to 80 mass %, particularly from 10 to 60 mass %.

*Volumetric Swelling Ratio*

A test piece of 20 × 20 × 2 mm is taken from a band-shaped polyurethane foam, and this test piece is immersed in purified water at 23 °C. During this immersion, the volume of the test piece is measured at intervals of a given period, and the volumetric swelling ratio is calculated according to the equation below. The ratio at the point when the increase in volume per day becomes not more than 0.01 is determined as the volumetric swelling ratio of the test piece.

$$\text{Volumetric swelling ratio} = \text{Volume after swelling} / \text{Volume before swelling}$$

In the waterproof sealing material of the present invention comprising a polyurethane foam, because the resin forming the wall of the cells itself is expanded, a sufficient swelling effect can be obtained by allowing water to diffuse into the resin. Furthermore, a stable expansion performance is exhibited over a long period.

In the above-mentioned polyurethane foam, both of the percentages of loss in mass when immersed in purified water at 70 °C for 7 days and when immersed in purified water at 23 °C for 180 days are usually not more than 3 mass %, preferably not more than 1 mass %. As is usually carried out as an evaluation method for the performances of water-swelling sealing materials, the percentage of loss in mass is measured as a change in mass before and after swelling when immersed in purified water. It is considered that the loss is an expanded component that has fallen out of the system, and the smaller the loss in mass, the better the durability of expansion performance.

In conventional waterproof sealing materials of water-swelling foams, it is necessary to make parts of cells open so that water may reach throughout a water-swelling component (e.g. water-absorbent resin, etc.), which is kneaded in the foam. This causes an increase in the percentage of loss in mass, which leads to deterioration of the waterproof sealing material. The waterproof sealing material of the present invention has improved this drawback.

In the waterproof sealing material of the present invention comprising a polyurethane foam, because it is not necessary to make cells open, the closed cell content measured by an air-pycnometer (air-comparative gravimeter) method is usually at least 60 %, preferably at least 80%.

In general, at the initial stage of the sealing process, a water-swelling waterproof sealing material acts to provide a waterproof watertight effect are a result of the stress generated by the compression stress exerted on the waterproof sealing material. Particularly, in the waterproof sealing material of the present invention, because it is not necessary to make parts of cells open as mentioned above, the elasticity of closed cells allows a lower compression stress relaxation than in conventional waterproof sealing materials of water-swelling foams. Thus, there is an advantage that the waterproof watertight effect can be maintained longer.

In the polyurethane foam used in the waterproof sealing material of the present invention, it is preferable that the compression stress at 50 % strain compression is from 1 to 25 kgf/cm$^2$, particularly preferably from 5 to 20 kgf/cm$^2$. When the compression stress at 50 % strain compression is at least 1 kgf/cm$^2$, the waterproof watertight effect at the initial stage of the sealing process is excellent. When the compression stress at 50 % strain compression is not more than 25 kgf/cm$^2$, and when using the waterproof sealing material as a sealing material for segments with tenon and mortise, the compression force on the segments for compressing the waterproof sealing material is not too large, so that there is no fear that it could have an adverse effect on the assembly precision of the segments, or that it could cause generation of cracks in the concave and convex portions of the segments.

Furthermore, in conventional waterproof sealing materials of water-swelling foams, when swelling occurs, rubber is softened as it is expanded because absorbed water acts like a plasticizer on the rubber. Thus, a sufficient expansion pressure cannot be obtained when the opening (space) between adjacent segments is large. In the waterproof sealing material of the present invention, the polyurethane foam itself is expanded, so that absorbed water causes little plasticization effect, and an effective expansion pressure is exhibited. Therefore, better properties are obtained in order to prevent water leaking (effect of stopping water leaking can be obtained).

The above-mentioned polyurethane foam can be produced using a foaming method with a blowing agent, a mechanical froth method, and/or a syntactic foam method as molding methods.

In any of these molding methods, a polyurethane foam can be produced, for example, either by a prepolymer method or by a one-shot method using a polyoxyalkylene polyol (a1) containing an oxyethylene unit or (a1) and a polyoxyalkylene polyol (a2) not containing an oxyethylene unit, with an aliphatic, alicyclic, or araliphatic polyisocyanate (b). The method of using a prepolymer containing an isocyanate end group is preferably employed, because the reactivity during the foam production can be controlled easily.

Examples of the polyoxyalkylene polyol (a1) containing an oxyethylene unit include polyoxyalkylene ethers (at least part of the polyoxyalkylene group is polyoxyethylene group) of low-molecular weight, active hydrogen-containing compounds with a number-average molecular weight of not more than 400, for example, those listed below in (1) to (3). For example, adducts of ethylene oxide (hereinafter abbreviated as EO) of these low-molecular weight, active hydrogen-containing compounds, and/or coadducts (random or block coadducts) of EO with other alkylene oxides [one kind or two or more kinds of alkylene oxides having 3 to 4 carbon atoms, e.g. propylene oxide (hereinafter abbreviated as PO), butylene oxide, tetrahydrofuran, etc.] may be used. Combinations of at least two kinds of these compounds also may be used as (a1).

The EO content in the alkylene oxides used in the above-mentioned adducts is preferably from 20 to 100 mass %, more preferably from 30 to 90 mass %.

Examples of the low-molecular weight active hydrogen-containing compound include the following compounds:

(1) Low molecular weight polyols: dihydric alcohols, such as ethylene glycol, propylene glycol, 1,4- or 1,3-butanediol, diethylene glycol, and cyclohexylene glycol; and polyhydric alcohols with a valency of 3 to 8 or more, such as glycerol, trimethylolpropane, pentaerythritol, sorbitol, and sucrose.

(2) Polyhydric phenols: polyhydric phenols with a valency of 2 to 8 or more, for example: monocyclic phenols, such as hydroquinone, resorcinol and catechol; and bisphenols, such as bisphenol A, bisphenol B, bisphenol F and bisphenol S, etc.

(3) Low molecular weight amines: alkanolamines (monoethanolamine, monobutanolamine, triethanolamine, isopropanolamine, N-methyldiethanolamine, etc.); alkylamines [number of carbon atoms in an alkyl group: 2 to 15] (ethylamine, n-butylamine, octylamine, etc.); alkylenepolyamines [number of carbon atoms in an alkylene group: 2 to 6] (ethylenediamine, hexamethylenediamine, diethylenetriamine, etc.); alicyclic diamines [number of carbon atoms: 4 to 15] (isophoronediamine, cyclohexylenediamine, etc.); aromatic diamines [number of carbon atoms: 6 to 20] (phenylenediamine, diaminotoluene, diethyltoluenediamine, dimethylthiotoluenediamine, xylylenediamine, etc.); and heterocyclic polyamines [number of carbon atoms: 4 to 15] (aminoethylpiperazine, etc.), and the like.

Preferable as (a1) are polyoxyethylene-polyoxypropylene ethers [obtained by coaddition (random or block) of EO and PO] of low molecular weight polyols or polyhydric phenols (particularly bisphenols), and combinations thereof, and more preferable are polyoxyethylene-polyoxypropylene ethers of polyhydric phenols. This is because the reactivity of the polyoxyethylene-polyoxypropylene ethers of low molecular weight polyols is controlled easily, and also because the polyurethane foams derived from the polyoxyethylene-polyoxypropylene ethers of polyhydric phenols having aromatic rings exhibit good physical properties after swelling with water.

The number-average molecular weight of (a1) is preferably from 600 to 6000, more preferably from 1000 to 5000. Furthermore, the average number of functional groups (average number of -OH groups) in (a1) is preferably from 2 to 4, more preferably from 2 to 3.

In the waterproof sealing material of the present invention, the polyoxyalkylene polyol (a2) not containing an oxyethylene unit may be used as a polyol, preferably in a range such that the content of oxyethylene groups in the polyurethane foam becomes from 5 to 80 mass %.

As (a2), polyoxyalkylene ethers [3 and/or 4 carbon atoms in an alkylene group] of low-molecular weight active hydrogen-containing compounds such as the above-mentioned (1) to (3) may be used, and they can be obtained by addition or coaddition (in the case of coaddition, either one of random addition and block addition may be used) of alkylene oxides other than EO [alkylene oxides having 3 or 4 carbon atoms, e.g. at least one of PO, butylene oxide, tetrahydrofuran, and the like]. Preferable among these are PO adducts of low molecular weight polyols or polyhydric phenols (particularly bisphenols) because of the same reason as explained in relation to (a1).

The number-average molecular weight of (a2) is preferably from 600 to 6000, more preferably from 1000 to 5000. Furthermore, the average number of functional groups (average number of -OH groups) in (a2) is preferably from 2 to 4, more preferably from 2 to 3.

Examples of the aliphatic, alicyclic, or araliphatic polyisocyanate (b) include aliphatic polyisocyanates having 2 to 18 carbon atoms (excluding the carbon in the NCO group, hereinafter the same), such as ethylene diisocyanate, tetramethylene diisocyanate, hexamethylene diisocyanate (HDI), dodecamethylene diisocyanate, 2,2,4-trimethylhexane diisocyanate, lysine diisocyanate, 2,6-diisocyanatomethyl caproate, bis(2-isocyanatoethyl) fumarate, bis(2-isocyanatoethyl) carbonate, and the like; alicyclic polyisocyanates having 4 to 15 carbon atoms, such as isophorone diisocyanate (IPDI), dicyclohexylmethane diisocyanate (hydrogenated MDI), cyclohexylene diisocyanate, methylcyclohexylene diisocyanate (hydrogenated TDI), bis(2-isocyanate ethyl)4-cyclohexene-1,2-dicarboxylate, and the like; araliphatic polyisocyanates having 8 to 15 carbon atoms, such as xylylene diisocyanate (XDI), tetramethylxylylene diisocyanate (TMXDI), and the like; and modified materials of these polyisocyanates (e.g. modified materials containing carbodiimide group, uretdion group, uretone-imine. group, urea group, biuret group, isocyanurate group, and the like).

Preferred among these are aliphatic or alicyclic diisocyanates, particularly preferably HDI, IPDI and hydrogenated MDI, in consideration of chemical resistance, weather resistance, and the like.

The method for preparing a prepolymer containing an isocyanate end group, which is an intermediate for producing the polyurethane foam used in the waterproof sealing material of the present invention by the prepolymer method, is exemplified as follows: the above-mentioned (a1) is allowed to react with an excess chemical equivalent of (b) with respect to (a1) by conventional method, preferably at a temperature of 60 to 150 °C, and thereby a prepolymer is obtained. As the excess chemical equivalent of (b), it is preferable that the chemical equivalent of isocyanate groups in (b) with respect to one chemical equivalent of active hydrogen-containing groups in (a1) is about from 1.2 to 10.

The content of isocyanate groups in the obtained prepolymer is preferably from 2 to 25 mass %, more preferably from 4 to 20 mass %.

For example, in order to control the content of oxyethylene group in the polyurethane foam within a preferable range of 5 to 80 mass %, (a2) may be used as needed in the production of the prepolymer.

In either one of the one-shot method and the prepolymer method, a hardening agent (a chain elongation agent, crosslinking agent, etc.) is used as needed in the production of the polyurethane foam. For example, the low molecular weight polyols and the polyamines (including diamines) among the low molecular weight amines, exemplified above for the low-molecular weight active hydrogen-containing compounds used as a raw material of (a1), can be used as the hardening agent.

Furthermore, high molecular weight compounds such as those exemplified above as (a1) or (a2) also can be used as the hardening agent, and combinations of two or more hardening agents also may be used.

When producing the polyurethane foam, an urethanation catalyst (metal catalysts such as dibutyl tin dilaurate, lead octoate, and stannous octoate; amine-based catalysts such as triethylamine and triethylenediamine, etc.); a filler (talc, bentonite, calcium carbonate, lithopone, silica, mica, etc.); a coloring agent (titanium white, colcothar, carbon black, chrome green, etc.); an ultraviolet absorbing agent; an antioxidant; a plasticizer; or the like may be added to carry out an urethanation reaction.

With respect to the used amounts of these components, the amount of the catalyst is preferably not more than 5 %, more preferably from 0.001 to 3.5 %, with respect to the total mass of all components for obtaining the polyurethane foam. The amount of the filler is preferably not more than 50 %, more preferably not more than 30 %. The amount of the coloring agent is preferably not more than 1 %. The amount of the ultraviolet absorbing agent is preferably not more than 1 %, more preferably from 0.01 to 0.5 %. The amount of the antioxidant is preferably not more than 1 %, more preferably from 0.01 to 0.5 %. The amount of the plasticizer is preferably not more than 10 %, more preferably not more than 5 %.

As the blowing agent used in the foaming method with a blowing agent, conventional blowing agents for polyurethane foams, such as water, methylene chloride, hydrogen atom-containing halogenated hydrocarbons (alternate fleon), low boiling point hydrocarbons, liquefied carbonate gas, and the like may be used. Combinations of two or more thereof also may be used.

The hydrogen atom-containing halogenated hydrocarbons include:

those of HCFC (hydrochlorofluorocarbon) types (e.g. HCFC-123, HCFC-141b, HCFC-22 and HCFC-142b); and
those of HFC (hydrofluorocarbon) types (e.g. HFC-134a, HFC-152a, HFC-356mff, HFC-236ea, HFC-245ca, HFC-245fa, and HFC-365mcf).

The low boiling point hydrocarbons are those having a boiling point of usually 5 to 70 °C, and examples include butane, pentane, cyclopentane, and mixtures thereof.

Among these, blowing with water is preferably employed.

In the case of using water, the amount used is usually from 0.1 to 30 %, preferably from 1 to 20 %, with respect to the total mass of the polyol used in forming the polyurethane foam.

In the case of using methylene chloride, the amount used is usually not more than 50 %, preferably from 5 to 45 %, with respect to the total mass of the polyol.

In the case of using a hydrogen atom-containing halogenated hydrocarbon, the amount used is usually not more than 50 %, preferably from 5 to 45 %, with respect to the total mass of the polyol.

In the case of using a low boiling point hydrocarbon, the amount used is usually not more than 45 %, preferably from 5 to 40 %, with respect to the total mass of the polyol.

In the case of using a liquefied carbonate gas, the amount used is usually not more than 30 %, preferably from 5 to 25 %, with respect to the total mass of the polyol.

The mechanical froth method is a foaming method in which an inert gas such as air or nitrogen is admixed with the above-mentioned raw material mixture for urethanation by a mixing head, so that bubbles are intermixed therein. Preferable is foaming by intermixing nitrogen.

The syntactic foam method is a method in which a foam is produced using hollow microspheres. As the hollow microspheres, hollow microspheres made of inorganic materials [glass balloon, silica balloon, etc.], those made of thermosetting resins [phenol resin balloon, epoxy resin balloon, etc.], those made of thermoplastic resins [acrylic resin (polyacrylonitrile) balloon, polyvinylidene chloride balloon, etc.], and the like may be used. Preferably acrylic resin balloon is used.

Furthermore, in the method of foaming with a blowing agent and the mechanical froth method, a small amount of hollow microsphere also may be added as a bubble-retaining material.

The amount of the hollow microsphere used is preferably not more than 60 %, more preferably from 0.2 to 40 %, with respect to the total mass of all components for obtaining the polyurethane foam.

In the method of foaming with a blowing agent and the mechanical froth method, it is preferable that a foam stabilizer, particularly a foam stabilizer for forming closed cells, is used for stabilizing cells. As the foam stabilizer, conventional foam stabilizers for polyurethane foams may be employed. Examples include silicone-based surfactants, such as polyoxyalkylene-polysiloxane copolymers, etc. Examples of the stabilizer for forming closed cells include "SZ-1931", "SZ-1323" and "SZ-1340" (manufactured by NIPPON UNICAR COMPANY LTD.); "SF-2962", "SF-2965", "SH-190" and "SH-192" (manufactured by TORAY DOW CORNING SILICONE CO., Ltd.), and the like.

The amount of the foam stabilizer used is preferably not more than 3 %, more preferably from 0.1 to 2%, with respect to the total mass of all components for obtaining the polyurethane foam.

Furthermore, in the mechanical froth foaming method and the syntactic foam method, a dehydrating agent (calcium oxide, calcium sulfide, calcium chloride, molecular sieve, etc.) may be added to the components for urethanation.

The amount of the dehydrating agent used is preferably not more than 8 %, more preferably from 0.5 to 6 %, with respect to the total mass of all components for obtaining the polyurethane foam.

A method for producing a polyurethane foam used in the waterproof sealing material of the present invention according to the foaming method with a blowing agent is exemplified as follows: using a prepolymer made from (a1) and (b) as a base component, and using (a2) previously mixed with a catalyst, an additive such as an antioxidant, and a blowing agent (e.g. water) as a hardening agent component, both components are cast into a mold by a two-liquid mixing and casting machine, and thereby a polyurethane foam is obtained.

In the mechanical froth method, for example, using the above-mentioned prepolymer as a base component, and using (a2) previously mixed with a catalyst and an antioxidant as a hardening agent component, both components are cast into a mold by a mechanical froth foaming machine while blowing nitrogen into the hardening agent component, and thereby a polyurethane foam is obtained.

In the syntactic foam method, for example, using the above-mentioned prepolymer as a base component, and using (a2) previously mixed with a catalyst, an antioxidant, a dehydrating agent, and a hollow microsphere as a hardening agent component, both components are cast into a mold by a two-liquid mixing and casting machine, and thereby a polyurethane foam is obtained.

Among these molding methods, the mechanical froth method and/or the syntactic foam method are preferred, because it is easier to control the target density.

In any of the above-mentioned molding methods, the chemical equivalent ratio of active hydrogen-containing groups in the hardening agent component with respect to isocyanate groups in the base component is preferably from 0.7 to 1.5, more preferably from 0.9 to 1.3.

Furthermore, in any of the molding methods, the content of urethane and/or urea groups in the obtained polyurethane foam is preferably from 0.5 to 1.8 mol/1000 g, more preferably from 0.6 to 1.5 mol/1000 g, so that good mechanical properties are exhibited before and after swelling.

Furthermore, the content of aromatic rings in the polyurethane foam is preferably from 0.1 to 1.5 mol/1000 g, more preferably from 0.15 to 1.0 mol/1000 g, so that good properties are exhibited after swelling with water.

Furthermore, the content of aromatic rings derived from polyols in the polyurethane foam is preferably from 0.1 to 1.5 mol/1000 g, more preferably from 0.15 to 1.0 mol/1000 g.

The waterproof sealing material of the present invention comprises a molded or molded and processed product of the above-mentioned polyurethane foam.

The method of molding or molding and processing the polyurethane foam is exemplified as follows: In accordance with any of the above-mentioned foaming methods, the base component and the hardening agent component are cast into a cylindrical mold having a tubular metal core set at its center, and cured by heating, preferably at 60 to 150 °C for 2 to 30 hours. Thus, a cylindrical molded product having a metal core at its center is obtained. This molded product is set in a band-knife peeling machine, which is usually used in producing long sheets of flexible foams, so that a sheet of a predetermined thickness is obtained. The sheet is wound up at a predetermined length, and then the foamed sheet wound up into a roll is cut into round slices at a predetermined width by a round-knife cutting machine. Thus, a band-shaped molded and processed product of the polyurethane foam having a rectangular cross section is obtained. Moreover, in accordance with the above-mentioned method, a molded and processed product also may be obtained by cutting a polyurethane foam obtained by slab foaming without using a mold.

Furthermore, a pole-shaped molded product may be produced by pouring a mixed solution into a prismatic closed mold, and curing it by heating in the same manner.

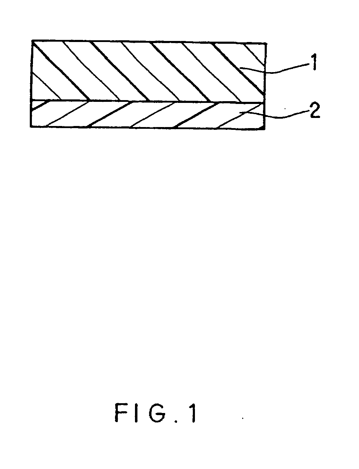

For example, a waterproof sealing material of the present invention comprising a laminate as illustrated in Fig. 1 may be produced by laminating a molded or molded and processed product of the above-mentioned polyurethane foam with a non-water-swelling, porous or non-porous elastic body. In Fig. 1, (1) is an oxyethylene group-containing polyurethane foam used in the present invention, and (2) is a non-water-swelling, porous or non-porous elastic body.

As the elastic body, an elastic body or a porous elastic body made of conventional natural or synthetic rubber (styrene-butadiene rubber, butadiene rubber, isoprene rubber, chloroprene rubber, acrylonitrile-butadiene rubber, ethylene-propylene-diene rubber, butyl rubber, etc.) may be used. Preferably used is a non-water-swelling porous elastic body having a compression stress at 50 % strain compression of 1 to 25 kgf/cm$^2$, which is the same as in the above-mentioned polyurethane foam.

When the opening (space) between adjacent segments is small as the segments are joined, the waterproof sealing material of the present invention can be used as a general sealing material for segments, or as a waterproof sealing material for box culvert.

Particularly, the waterproof sealing material of the present invention is suitable for used as a waterproof sealing material for sealing tenon and mortise segments, in which the adjoining surfaces of the segments for constituting a tunnel have concave and convex portions (respectively mortise and tenon), and a lower compression stress is required for fitting the concave and convex portions at the joining of the segments.

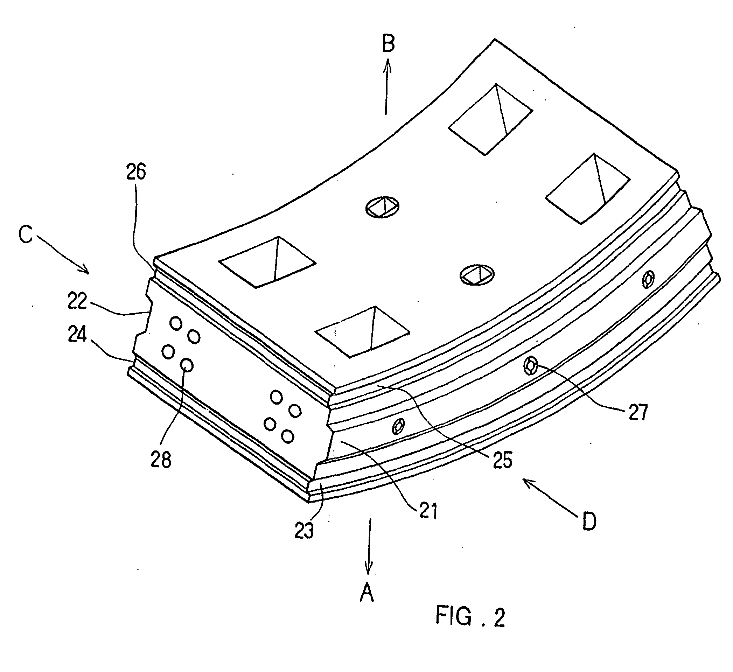

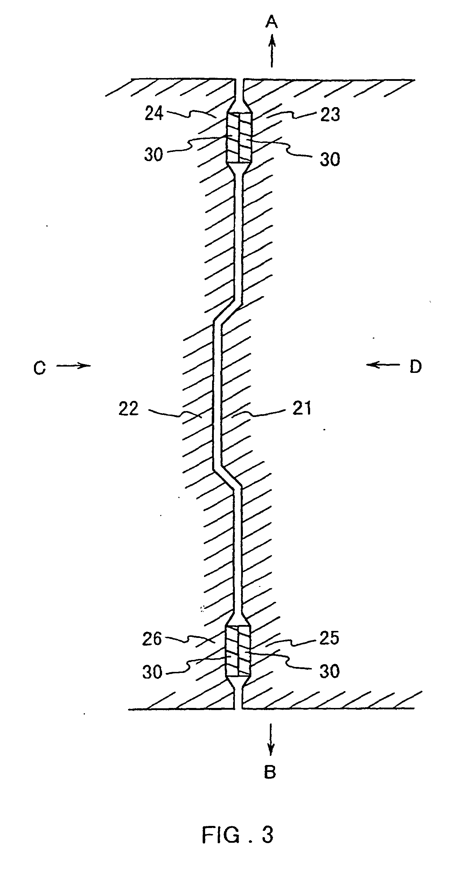

Fig. 2 is a perspective view of one embodiment of a segment with tenon and mortise, which is used in shield method when constructing a tunnel. Fig. 3 is a partially sectional view showing a condition in which a tenon (a convex portion) is joined with a mortise (a concave portion) between adjacent segments to carry out sealing.

In Figs. 2 and 3, numeral 21 denotes a tenon (a convex portion); 22 denotes a mortise (a concave portion); 23 and 24 denote grooves for sealing material; 25 and 26 also denote grooves for sealing material; 27 denotes a fastening portion between adjacent rings; 28 denotes a fastening portion between adjacent pieces; and 30 denotes a waterproof sealing material of the present invention. Furthermore, in the drawing, the direction of an arrow A indicates outside the tunnel; the direction of an arrow B indicates inside the tunnel; an arrow C indicates a concave surface (mortise) of a segment; and an arrow D indicates a convex surface (tenon) of a segment. Further, as illustrated in Fig. 3, a plurality of segments with tenon and mortise surfaces are prepared, and the concave surface (mortise) indicated by the arrow C and the convex surface (tenon) indicated by the arrow D are combined in the respective segments so that the tenon (convex) 21 and the mortise (concave) 22 may be fitted. During this process, the waterproof sealing material 30 of the present invention which is molded and processed into a band shape is inserted between the grooves 23 and 24 and between the grooves 25 and 26 to carry out sealing. Moreover, depending on the shape of the segments, the grooves 25 and 26 are not present in some segments. In such a case, the waterproof sealing material of the present invention which is molded and processed into a band shape is inserted only between the grooves 23 and 24 to carry out sealing.

The present invention is further described below with reference to the following examples. However, the present invention is not limited only to these example.

Example 1

The following prepolymer was used as a base:

10,000 g of a polyether glycol with a number-average molecular weight of 4000 obtained by adding a mixture of EO and PO (at a ratio of 80/20 by mass) to bisphenol A was allowed to react with 3570 g of dicyclohexylmethane diisocyanate at 120 °C for 90 minutes, and thereby 13,570 g of a prepolymer containing 7.5 mass % of isocyanate groups was obtained.

2019.8 g of a hardening agent component was prepared by mixing 1820 g of diethyltoluenediamine with 27.1 g of water (a blowing agent), 157 g of a foam stabilizer "SZ-1931" [manufactured by NIPPON UNICAR COMPANY LTD.] and 15.7 g of dibutyl tin dilaurate (an urethanation catalyst).

In a cylindrical mold of 200 mm in diameter and 150 mm in height, which had a metal core set at its center, the base and the hardening agent were mixed and cast by a two-liquid mixing and casting machine at the above-mentioned ratio (a ratio at which the chemical equivalent ratio of amino groups with respect to the isocyanate groups in the prepolymer becomes 1.05), and it was cured by heating at 100 °C for 90 minutes, followed by after-curing at 80 °C for 24 hours. Thus, a cylindrical molded product having a metal core at its center was obtained (aromatic ring content of 0.98 mol/1000 g; in this content, the content of aromatic rings derived from polyols being 0.32 mol/1000 g; urethane and/or urea group content of 1.4 mol/1000 g; closed cell content according to the air-pycnometer method of 83 %). Using a peeling machine, the molded product was cut into a sheet of thickness 10 mm, and it was wound up into a roll. Thereafter, it was cut into round slices of 20 mm wide by a round-knife cutting machine, so that a band-shaped molded and processed product of 10 mm thick and 20 mm wide was obtained. The values of the properties of this band-shaped molded and processed product are shown in Table 1.

Example 2

The following prepolymer was used as a base:

10,000 g of a polyether glycol with a number-average molecular weight of 4000 obtained by adding a mixture of EO and PO (at a ratio of 50/50 by mass) to propylene glycol was allowed to react with 2360 g of isophorone diisocyanate, and thereby 12,360 g of a prepolymer containing 5.5 mass % of isocyanate groups was obtained. 5859.7 g of a hardening agent component was prepared by mixing 5380 g of EO adduct of bisphenol A (number-average molecular weight of 670) with 157 g of a foam stabilizer "SZ-1931" [manufactured by NIPPON UNICAR COMPANY LTD.], 53.7 g of lead octoate (an urethanation catalyst), and 269 g of "Molecular Sieve 3AB" (a dehydrating agent) [manufactured by UNION CARBIDE].

The base and the hardening agent component were mixed and cast by a mechanical froth foaming machine ("MF 350", manufactured by TOHO MACHINERY CO., Ltd.) at the above-mentioned liquid ratio (a ratio at which the chemical equivalent ratio of hydroxyl groups with respect to the isocyanate groups in the prepolymer becomes 1.03) at a total rate of 3 kg/min with dry nitrogen at 0.8 liter/min, and it was cured by heating at 110 °C for 4 hours, followed by after-curing at 80 °C for 24 hours. Thus, a cylindrical molded product having a metal core at its center was obtained. The molded product was peeled into a thickness of 10 mm, and was cut into round slices of width 20 mm, so that a band-shaped molded and processed product of thickness 10 mm and width 20 mm was obtained (aromatic ring content of 0.88 mol/1000 g; in this content, content of aromatic rings derived from polyols being 0.88 mol/1000 g; urethane and/or urea group content of 0.88 mol/1000 g; closed cell content of 90 %). The values of the properties of this band-shaped molded and processed product are shown in Table 1.

Example 3

1653 g of "Duranate D-101" (manufactured by Asahi Chemical Industry Co., Ltd.; a hydrogenated MDI-based two-functional prepolymer; 19.0 mass % content of isocyanate groups) was used as a base.
4000 g of a polyether glycol with a number-average molecular weight of 4000 obtained by adding a mixture of EO and PO (at a ratio of 80/20 by mass) to bisphenol A, and 6000 g of a polyether triol with a number-average molecular weight of 3000 obtained by adding a mixture of EO and PO (at a ratio of 20/80 by mass) to glycerol were mixed. This mixture was admixed with 173 g of a foam stabilizer "SZ-1931" [manufactured by NIPPON UNICAR COMPANY LTD.], 61.1 g of lead octoate (an urethanation catalyst), 23.0 g of an acrylic resin balloon "MFL-80ED" (hollow microsphere) [manufactured by MATSUMOTO YUSHI-SEIYAKU CO., Ltd.; density of 0.023], and 173 g of "Molecular Sieve 3AB" (a dehydrating agent) [manufactured by UNION CARBIDE], and thereby 10,430.1 g of a hardening agent component was prepared.
The base and the hardening agent component were mixed and cast by a mechanical froth foaming machine ("MF 350 type", manufactured by TOHO MACHINERY CO., Ltd.) at the above-mentioned liquid ratio (a ratio at which the chemical equivalent ratio of hydroxyl groups with respect to the isocyanate groups in the "Duranate D-101" becomes 1.10) at a total rate of 3 kg/min with dry nitrogen at 0.3 liter/min, and it was cured by heating at 110 °C for 6 hours, followed by after-curing at 80 °C for 24 hours. The molded product was peeled into a thickness of 10 mm, and was cut into round slices of width 20 mm, so that a band-shaped molded and processed product of thickness 10 mm and width 20 mm was obtained (aromatic ring content of 0.17 mol/1000 g; in this content, content of aromatic rings derived from polyols being 0.17 mol/1000 g; urethane and/or urea group content of 0.66 mol/1000 g; closed cell content of 98 %).

The values of the properties of this band-shaped molded and processed product are shown in Table 1.

Example 4

Using a peeling machine, the cylindrical molded product having a metal core at its center as obtained in Example 1 was cut into a sheet of thickness 7 mm. The sheet was wound up into a roll while adhering a chloroprene foam of thickness 3 mm (containing closed cells; density of 0.85 g/cm$^3$; compression stress at 50 % strain compression of 20 kgf/cm$^2$) thereto with a chloroprene-based adhesive ("KONY BOND G17": manufactured by Konishi Co., Ltd.). This was cut into round slices of width 20 mm, so that a band-shaped molded and processed product of thickness 10 mm and width 20 mm was obtained. The values of the properties of this band-shaped molded and processed product are shown in Table 1.

Comparative Example 1

Ethylene-propylene rubber (EPDM) was kneaded with a polyacrylate-based water-absorbent resin "SANFRESH ST-500MPS" [manufactured by Sanyo Chemical Industries, Ltd.] and an isobutylene-maleic anhydride alternating copolymer type water-absorbent resin "KI GEL 201 K-F2" [manufactured by KURARAY CO., LTD.] as water-absorbent resins at a ratio mentioned below (parts by mass). Thereafter, this was vulcanized and foamed at 150 °C for 30 minutes, and then cooled. Thereafter, parts of cells were broken by applying pressure, so that a foam of water-swelling rubber of which half being comprised of open cells and half being comprised of closed cells (50 % of closed cells) was obtained. This was cut into a band shape of thickness 10 mm and width 20 mm to obtain a test specimen.

| *Mixed Ratio (parts by mass)* | |
| --- | --- |
| EPDM | 100 parts |
| Zinc oxide | 5 parts |
| Stearic acid | 3 parts |
| Carbon black | 5 parts |
| Clay | 75 parts |
| Process oil | 40 parts |
| Sulfur | 1.5 parts |
| Butylthiourea | 2.0 parts |
| Blowing agent (azodicarbon amide) | 5 parts |
| Blowing aid [manufactured by EIWA CHEMICAL IND. CO., LTD.; "CELLPASTE K-5"] | 2 parts |
| "SANFRESH ST-500MPS" | 30 parts |
| "KI GEL 201K-F2" | 30 parts |

Comparative Example 2

As a base, 30.8 parts by mass of TDI-65 was used.
A hardening agent component was prepared by mixing 100 parts by mass of "EP-550H" [a polyether polyol not containing an oxyethylene group, manufactured by Mitsui-Nisso Co., Ltd.] with "Sumicagel A-40" (a water-absorbent resin) [manufactured by Sumitomo Chemical Co., Ltd.], 2 parts by mass of a foam stabilizer "F-258" [manufactured by Shin-Etsu Chemical Co., Ltd.], 0.15 parts by mass of stannous octoate (an urethanation catalyst), and 0.5 parts by mass of water (a blowing agent).
According to the same procedure as in Example 1, the base and the hardening agent component were mixed and cast at the above-mentioned liquid ratio (a ratio at which the chemical equivalent ratio of hydroxyl groups with respect to the isocyanate groups in TDI-65 becomes 1.20), and it was cured by heating at 110 °C for 3 hours, followed by after-curing at 80 °C for 24 hours. It was peeled into a thickness of 10 mm, and cut into round slices of width 20 mm, so that a band-shaped molded and processed product of thickness 10 mm and width 20 mm was obtained. By applying pressure to this product, parts of cells were broken, so that a foam of water-swelling rubber of which half being comprised of open cells and half being comprised of closed cells (50 % of closed cells) was obtained. The values of the properties of this band-shaped molded and processed product are shown in Table 1.

[Examples of Performance Tests]

Table 2 shows the values of the tensile properties of the respective test specimens obtained in Examples 1 to 4 and Comparative Examples 1 and 2; Table 3 shows the results of a test for long-term expansion and a test for percentage of loss in mass; Table 4 shows the results of a test for stress relaxation; and Table 5 shows the results of a test for the performance of stopping water leaking. The procedures of these tests are as follows:

*Density*

Density was measured according to ASTM D2406.

*Compression Stress*

Using 10 cm of each waterproof sealing material obtained in Examples 1 to 4 and Comparative Example 1 and 2 as a test piece, it was sandwiched between a pair of steel flat plates to be compressed by a compression testing machine, and a compressive force per unit area was calculated.

*Tensile Properties*

Using a No. 3 dumbbell specimen, tensile properties were measured according to "Physical Test Methods for Vulcanized Rubber" described in JIS K6301.

*Volumetric* Swelling *Ratio*

A test piece of 20 × 20 × 2 mm was taken from a band-shaped specimen, and the volume of this test piece when immersed in purified water at 23 °C was measured each day. The volumetric swelling ratio was calculated according to the following formula, and the ratio at a point when the increase in volume per day became not more than 0.01 was determined as the volumetric swelling ratio of the test piece:

$$\text{Volumetric swelling ratio} = \text{Volume after swelling} / \text{Volume before swelling.}$$

*Percentage* of Volumetric *Swelling*

A test piece of 20 × 20 × 2 mm was taken from a band-shaped specimen, and the volume of this test piece when immersed in purified water at 23 °C was measured at intervals of a predetermined period. The percentage of volumetric swelling was calculated according to the following formula:

$$\text{Percentage of volumetric swelling (\%)} = 100 \times (\text{Volume after swelling}$$
$$- \text{Volume before swelling}) / \text{Volume before swelling.}$$

*Percentage of Loss in Mass (at 70 °C)*

A test piece of 20 × 20 × 2 mm was taken from a band-shaped specimen. This test piece was immersed in purified water at 70 °C for 7 days, and thereafter it was dried in an oven at 60 °C, and the mass of the test piece at a point when the loss in mass became not more than 0.1 g was determined as the mass after drying. The percentage of loss in mass at 70 °C was calculated according to the following formula:

$$\text{Percentage of loss in mass (\%)} = 100 \times (\text{Mass before swelling - Mass}$$
$$\text{after drying}) / \text{Mass before swelling.}$$

*Percentage of Loss in Mass (at 23 °C)*

A test piece after measuring the percentage of volumetric swelling for 180 days was dried in an oven at 60 °C. The mass of the test piece at a point when the loss in mass became not more than 0.1 g was determined as the mass after drying. The percentage of loss in mass at 23 °C was calculated according to the following formula:

$$\text{Percentage of loss in mass (\%)} = 100 \times \text{(Mass before swelling - Mass}$$

$$\text{after drying) / Mass before swelling.}$$

*Test of Stress Relaxation*

Using 10 cm of each waterproof sealing material obtained in Examples 1 to 4 and Comparative Example 1 and 2 as a test piece, it was sandwiched between a pair of steel flat plates to be compressed by a compression testing machine at 50% strain compression. Change in the compression stress was measured with passage of time, and the percentage of retention of compression stress before starting relaxation was calculated.

*Test of Performance of Stopping Water leaking*

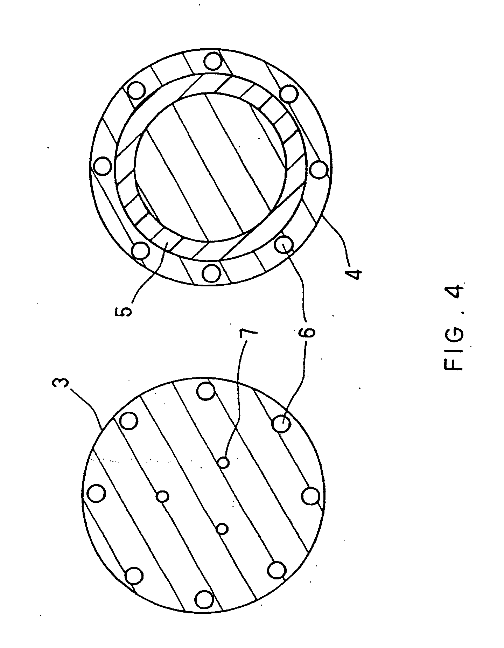

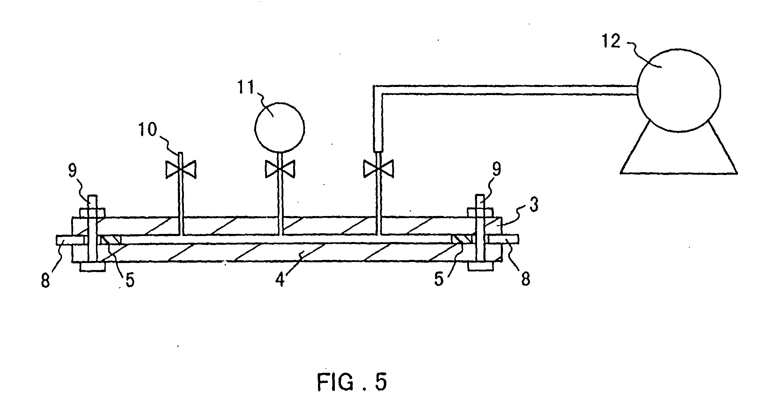

As illustrated in Fig. 4 (a plan view), a circular band-shaped test piece (5) of each waterproof sealing material obtained in Examples 1 to 4 and Comparative Examples 1 and 2 was stuck on a surface of a lower plate (4) of a pair of steel flanges (3 and 4) with an adhesive. Thereafter, as illustrated in Fig. 5 (a sectional view), the flanges were fastened with screw bolts and nuts (9) at a predetermined compression using spacers (8) to produce a testing apparatus. Then, after filling water inside the testing apparatus, a water pressure was applied by a hydraulic pump (12), and a maximum pressure of stopping water leaking was measured by a pressure gauge (11). In Fig. 4, (6) indicates holes for screw bolts, and (7) indicates holes for attaching pipes. Furthermore, in Fig. 5, (10) indicates an air vent valve.

Table 1

|  | Density (g/cm$^3$) | Compression stress at 50 % strain compression (kgf/cm$^2$) | Content of oxyethylene groups (% by mass) |
|---|---|---|---|
| Example 1 | 0.45 | 14 | 51 |
| 2 | 0.65 | 16 | 47 |
| 3 | 0.57 | 20 | 37 |
| 4 | 0.70 | 18 | 36 |
| Comparative Example 1 | 0.51 | 23 | 0 |
| 2 | 0.52 | 18 | 0 |

Table 2

|  | Hardness (JIS-A) | Tensile Strength (kgf/cm$^2$) | Elongation (%) |
|---|---|---|---|
| Example 1 | 36 | 15 | 730 |
| 2 | 41 | 18 | 750 |
| 3 | 40 | 14 | 740 |
| 4 | 36 | 15 | 720 |
| Comparative Example 1 | 38 | 82 | 420 |
| 2 | 37 | 98 | 500 |

Table 3

|  | Volumetric swelling ratio | Percentage of swelling (% by volume) | | Percentage of loss in mass (% by volume) | |
|---|---|---|---|---|---|
|  |  | after 30 days | after 180 days | 70 °C | 23 °C |
| Example 1 | 3.2 | 221 | 223 | 1.0 | 1.3 |
| 2 | 3.1 | 205 | 206 | 0.7 | 1.0 |
| 3 | 2.6 | 158 | 160 | 0.8 | 1.0 |
| 4 | 2.5 | 153 | 154 | 1.5 | 1.8 |

Table 3   (continued)

| | Volumetric swelling ratio | Percentage of swelling (% by volume) | | Percentage of loss in mass (% by volume) | |
|---|---|---|---|---|---|
| | | after 30 days | after 180 days | 70 °C | 23 °C |
| Comparative Example 1 | 3.4 | 230 | 201 | 7.8 | 15 |
| 2 | 3.3 | 221 | 209 | 6.5 | 13 |

Table 4

| | Retention of Compression Stress (%) | |
|---|---|---|
| | after 1 hour | after 3 hours |
| Example 1 | 80 | 67 |
| 2 | 82 | 70 |
| 3 | 83 | 71 |
| 4 | 81 | 68 |
| Comparative Example 1 | 70 | 52 |
| 2 | 69 | 48 |

Table 5

| | Strain Compression of 0% | |
|---|---|---|
| | Time required to stop water leaking at 1 kgf/cm$^2$ (hour) | Time required to stop water leaking at 3 kgf/cm$^2$ (hour) |
| Example 1 | 35 | 57 |
| 2 | 30 | 52 |
| 3 | 33 | 54 |
| 4 | 36 | 60 |
| Comparative Example 1 | 52 | (water leaking could not be stopped in 30 days) |
| 2 | 50 | (water leaking could not be stopped in 30 days) |
| | Strain Compression of -20 % (Space between the waterproof sealing material and the steel flange is 2 mm) | |
| | Time required to stop water leaking at 1 kgf/cm$^2$ (hour) | Time required to stop water leaking at 3 kgf/cm$^2$ (hour) |
| Example 1 | 81 | 121 |
| 2 | 76 | 115 |
| 3 | 78 | 118 |
| 4 | 83 | 124 |
| Comparative Example 1 | (water leaking could not be stopped in 30 days) | (water leaking could not be stopped in 30 days) |
| 2 | (water leaking could not be stopped in 30 days) | (water leaking could not be stopped in 30 days) |

INDUSTRIAL APPLICABILITY

The waterproof sealing material of the present invention comprises a molded or molded and processed product of an oxyethylene group-containing polyurethane foam, and the polyurethane foam itself is expanded. Therefore, the waterproof sealing material of the present invention contains no expansive component that elutes into water, so that it has a small percentage of loss in mass, and shows a stable expansion performance over a long period.

Because of the above-mentioned effects, when the opening (space) between adjacent segments is small at the execution of the segments, the waterproof sealing material of the present invention can be used as a general sealing material for segments or a waterproof sealing material for box culvert.

Particularly, in shield methods for constructing a tunnel or the like, the waterproof sealing material of the present invention is useful as a sealing material for segments joined by a mortise and tenon arrangement, in which adjoining surfaces of the segments have concave and convex portions, and a lower compression stress is required for fitting the concave and convex portions.

**Claims**

1. A molded and optionally processed polyurethane foam product for waterproof sealing, wherein the polyurethane foam contains an oxyethylene group, has a density of 0.3 to 0.9 g/cm$^3$, a volumetric swelling ratio of 1.2 to 8, and the percentage of loss in mass both when immersed in water at 70°C for 7 days and when immersed in water at 23°C for 180 days is not more than 3%.

2. The polyurethane foam product for waterproof sealing according to claim 1, wherein the polyurethane foam has a compression stress at 50% strain compression of 1 to 25 kgf/cm$^2$, preferably 5 to 20 kgf/cm$^2$.

3. The polyurethane foam product for waterproof sealing according to claim 1 or 2, wherein the polyurethane foam contains from 5 to 80 mass %, preferably from 10 to 60 mass %, of oxyethylene groups.

4. The polyurethane foam product for waterproof sealing according to claim 1 or 2, wherein the polyurethane foam is selected from a foam made with a blowing agent, a mechanical froth foam and a syntactic foam, preferably from a mechanical froth foam or a syntactic foam.

5. The polyurethane foam product for waterproof sealing according to claim 1 or 2, wherein the polyurethane foam has a content of closed cells of at least 60%, preferably at least 80%.

6. The polyurethane foam product for waterproof sealing according to claim 1 or 2, wherein the polyurethane foam has a content of urethane and/or urea groups of 0.5 to 1.8 mol/1000g, preferably from 0.6 to 1.5 mol/1000g; and a content of aromatic rings of 0.1 to 1.5 mol/1000g, preferably from 0.15 to 1.0 mol/1000g.

7. The polyurethane foam product for waterproof sealing according to claim 1 or 2, wherein the polyurethane foam is derived from a compound (b) selected from at least one of the following: aliphatic polyisocyanates, alicyclic polyisocyanates and araliphatic polyisocyanates, preferably at least one selected from araliphatic polyisocyanates and alicyclic diisocyanates; a polyoxyalkylene polyol (a1) containing an oxyethylene unit; and if necessary a polyoxyalkylene polyol (a2) not containing an oxyethylene unit.

8. The polyurethane foam product for waterproof sealing according to claim 7, wherein the polyoxyalkylene polyol (a1) containing an oxyethylene unit is a polyoxyethylene-polyoxypropylene ether or a low molecular weight polyol or a polyhydric phenol.

9. The polyurethane foam product for waterproof sealing according to claim 1 or 2, wherein the molded and processed product is a band-shaped processed and molded product having a rectangular cross-section, which is obtained by cutting a cylindrical molded product or a slab foamed product.

10. The polyurethane foam product for waterproof sealing according to claim 1, which is obtained by further laminating a non-water-swelling, porous or non-porous elastic body, preferably a natural or synthetic rubber.

11. The polyurethane foam product for waterproof sealing according to claim 1 or 10, wherein the polyurethane foam product for waterproof sealing is a waterproof sealing material for segments with tenon and mortise joints.

12. A method for preventing water leaking, using the polyurethane foam product for waterproof sealing of claim 1 or 10 on adjoining surfaces of segments in shield methods, in which a tunnel is constructed by joining segments together.

13. The method according to claim 12, wherein a molded and processed polyurethane foam product for waterproof sealing is inserted between the grooves of segments with tenon and mortise joints.

**Patentansprüche**

1. Gegebenenfalls nachbearbeitetes Polyurethanschaum-Formstück zum Abdichten gegen Wasser, **dadurch gekennzeichnet dass** der Polyurethanschaum eine Oxyethylengruppe enthält, eine Dichte von 0,3 bis 0,9 g/cm$^3$ und ein volumetrisches Quellverhältnis von 1,2 bis 8 aufweist und der prozentuale Massenverlust sowohl beim 7-tägigen Eintauchen in Wasser bei 70 °C als auch beim 180tägigen Eintauchen in Wasser bei 23 °C höchstens 3 % beträgt.

2. Polyurethanschaum-Formstück zum Abdichten gegen Wasser nach Anspruch 1, **dadurch gekennzeichnet, dass** der Polyurethanschaum eine Stauchspannung bei 50 % Stauchung von 1 to 25 kgf/cm$^2$, vorzugsweise 5 bis 20 kgf/cm$^2$ aufweist.

3. Polyurethanschaum-Formstück zum Abdichten gegen Wasser nach Anspruch 1 oder 2, **dadurch gekennzeichnet, dass** der Polyurethanschaum 5 bis 80 Masse%, vorzugsweise 10 bis 60 Masse-%, Oxyethylengruppen enthält.

4. Polyurethanschaum-Formstück zum Abdichten gegen Wasser nach Anspruch 1 oder 2, **dadurch gekennzeichnet, dass** der Polyurethanschaum ausgewählt ist unter einem mit einem Treibmittel hergestellten Schaum, einem mechanisch geschlagenen Schaum und einem syntaktischen Schaum, vorzugsweise einem mechanisch geschlagenen Schaum oder syntaktischen Schaum.

5. Polyurethanschaum-Formstück zum Abdichten gegen Wasser nach Anspruch 1 oder 2, **dadurch gekennzeichnet, dass** der Polyurethanschaum einen Gehalt geschlossener Zellen von wenigstens 60 %, vorzugsweise wenigstens 80 % aufweist.

6. Polyurethanschaum-Formstück zum Abdichten gegen Wasser nach Anspruch 1 oder 2, **dadurch gekennzeichnet, dass** der Polyurethanschaum einen Gehalt an Urethanund/oder Harnstoffgruppen von 0,5 bis 1,8 mol/1000 g, vorzugsweise 0,6 bis 1,5 mol/1000 g; und einen Gehalt an aromatischen Ringen von 0,1 bis 1,5 mol/1000 g, vorzugsweise 0,15 bis 1,0 mol/1000 g aufweist.

7. Polyurethanschaum-Formstück zum Abdichten gegen Wasser nach Anspruch 1 oder 2, **dadurch gekennzeichnet, dass** sich der Polyurethanschaum ableitet von einer Verbindung (b), die ausgewählt ist unter wenigstens einer der folgenden VerbiR dungen: aliphatischen Polyisocyanaten, alicyclischen Polyisocyanaten und arali phatischen Polyisocyanaten, vorzugsweise wenigstens einer unter araliphatischen Polyisocyanaten und alicyclischen Diisocyanaten ausgewählten Verbindung; einem Polyoxyalkylenpolyol (a1), das eine Oxyethyleneinheit enthält; und gegebenenfalls einem Polyoxyalkylenpolyol (a2), das keine Oxyethyleneinheit enthält.

8. Polyurethanschaum-Formstück zum Abdichten gegen Wasser nach Anspruch 7, **dadurch gekennzeichnet, dass** es sich bei dem eine Oxyethyleneinheit enthaltenden Polyoxyalkylenpolyol (a1) um einen Polyoxyethylen-Polyoxypropylenether eines niedermolekularen Polyols oder eines mehrwertigen Phenols handelt.

9. Polyurethanschaum-Formstück zum Abdichten gegen Wasser nach Anspruch 1 oder 2, **dadurch gekennzeichnet, dass** es sich bei dem nachbearbeiteten Formstück um ein bandförmiges nachbearbeites Formstück mit rechteckigem Querschnitt handelt, das durch Aufschneiden eines zylindrischen Formstücks oder eines scheibenförmigen geschäumten Stücks erhalten ist.

10. Polyurethanschaum-Formstück zum Abdichten gegen Wasser nach Anspruch 1, das erhalten ist durch nachträgliches Auflaminieren eines nicht-wasserquellenden porösen oder nicht-porösen elastischen Körpers, vorzugsweise eines natürlichen oder synthetischen Kautschuks.

11. Polyurethanschaum-Formstück zum Abdichten gegen Wasser nach Anspruch 1 oder 10, **dadurch gekennzeichnet, dass** es sich bei dem Polyurethanschaum-Formstück zum Abdichten gegen Wasser um ein wasserdichtes Dichtmaterial für Segmente mit Loch-und-Zapfen-Verbindungen handelt.

12. Verfahren zum Verhindern eines Wassereintritts unter Verwendung des Polyurethanschaum-Formstücks zum Abdichten gegen Wasser nach Anspruch 1 oder 10 auf angrenzenden Oberflächen von Segmenten beim Schildvortrieb, bei dem durch Verbinden der Segmente miteinander ein Tunnel gebaut wird.

13. Verfahren nach Anspruch 12, **dadurch gekennzeichnet, dass** man ein nachbearbeitetes Polyurethanschaum-Formstück zum Abdichten gegen Wasser zwischen die Fugen der Segmente mit Loch-und-Zapfen-Verbindungen einbringt.

**Revendications**

1. Produit en mousse de polyuréthane moulé et éventuellement traité pour scellement étanche à l'eau, dans lequel la mousse de polyuréthane contient un groupe oxyéthylène, a une masse volumique de 0,3 à 0,9 g/cm$^3$, un taux de gonflement volumétrique de 1,2 à 8, et le pourcentage de perte de masse tant lorsqu'il est immergé dans de l'eau à 70°C pendant 7 jours que lorsqu'il est immergé dans de l'eau à 23°C pendant 180 jours ne dépasse pas 3 %.

2. Produit en mousse de polyuréthane pour scellement étanche à l'eau selon la revendication 1, dans lequel la mousse de polyuréthane a une contrainte de compression pour une compression par déformation de 50 % de 1 à 25 kgf/cm$^2$, de préférence de 5 à 20 kgf/cm$^2$.

3. Produit en mousse de polyuréthane pour scellement étanche à l'eau selon la revendication 1 ou 2, dans lequel la mousse de polyuréthane contient de 5 à 80 % en masse, de préférence de 10 à 60 % en masse, de groupes oxyéthylène.

4. Produit en mousse de polyuréthane pour scellement étanche à l'eau selon la revendication 1 ou 2, dans lequel la mousse de polyuréthane est choisie parmi une mousse produite avec un agent porogène, une mousse obtenue par battage mécanique et une mousse syntactique, de préférence une mousse obtenue par battage mécanique ou une mousse syntactique.

5. Produit en mousse de polyuréthane pour scellement étanche à l'eau selon la revendication 1 ou 2, dans lequel la mousse de polyuréthane a une teneur en cellules fermées d'au moins 60 %, de préférence d'au moins 80 %.

6. Produit en mousse de polyuréthane pour scellement étanche à l'eau selon la revendication 1 ou 2, dans lequel la mousse de polyuréthane a une teneur en groupes uréthane et/ou urée de 0,5 à 1,8 mol/1000 g, de préférence de 0,6 à 1,5 mol/1000 g ; et une teneur en cycles aromatiques de 0,1 à 1,5 mol/1000 g, de préférence de 0,15 à 1,0 mol/1000 g.

7. Produit en mousse de polyuréthane pour scellement étanche à l'eau selon la revendication 1 ou 2, dans lequel la mousse de polyurèthane dérive d'un composé (b) choisi parmi au moins l'un des suivants : les polyisocyanates aliphatiques, les polyisocyanates alicycliques et les polyisocyanates araliphatiques, de préférence au moins l'un choisi parmi les polyisocyanates araliphatiques et les diisocyanates alicycliques ; d'un polyoxyalkylènepolyol (a1) contenant un motif oxyéthylène ; et si nécessaire d'un polyoxyalkylènepolyol (a2) ne contenant pas de motif oxyéthylène.

8. Produit en mousse de polyuréthane pour scellement étanche à l'eau selon la revendication 7, dans lequel le polyoxyalkylènepolyol (a1) contenant un motif oxyéthylène est un éther de polyoxyéthylène/polyoxypropylène ou un polyol de faible masse moléculaire ou un phénol polyvalent.

9. Produit en mousse de polyuréthane pour scellement étanche à l'eau selon la revendication 1 ou 2, dans lequel le produit moulé et traité est un produit moulé et traité en forme de bande ayant une section transversale rectangulaire, qui est obtenu par découpe d'un produit moulé cylindrique ou d'un produit expansé en lingot.

10. Produit en mousse de polyuréthane pour scellement étanche à l'eau selon la revendication 1, qui est obtenu de plus par stratification d'un corps élastique ne gonflant pas à l'eau, poreux ou non-poreux, de préférence un caoutchouc naturel ou synthétique.

11. Produit en mousse de polyuréthane pour scellement étanche à l'eau selon la revendication 1 ou 10, dans lequel le produit en mousse de polyuréthane pour scellement étanche à l'eau est un matériau de scellement étanche à l'eau pour des segments avec des joints à tenon et mortaise.

12. Procédé pour empêcher les fuites d'eau, utilisant le produit en mousse de polyuréthane pour scellement étanche à l'eau de la revendication 1 ou 10 sur des surfaces attenantes de segments dans des procédés de protection, où un tunnel est construit par assemblage de segments les uns aux autres.

13. Procédé selon la revendication 12, dans lequel un produit en mousse de polyuréthane moulé et traité pour scellement étanche à l'eau est inséré entre les rainures de segments avec des joints à tenon et mortaise.

FIG. 1

FIG . 2

FIG . 3

FIG. 4

FIG . 5

EP 1 116 766 B1